# EUROPEAN PATENT APPLICATION

(11) **EP 1 771 010 A1**
(43) Date of publication of application: **04.04.2007**
(21) Application number: 05077218.5
(22) Date of filing: 29.09.2005
(51) Int. Cl.: H04N 9/31

(54) **Digital video projection device**

(71) Applicant: Barco, naamloze vennootschap., 8500 Kortrijk (BE)
(72) Inventor: Karlsson, Mats Roland, 8500 Kortrijk (BE); Gerets, Peter, 8800 Roeselare (BE)
(74) Representative: Donné, Eddy

(57) **Abstract**

Digital video projection device comprising a light source (3) to produce an image building light beam (7), one or more lenses (4), a light valve (5) and a colour wheel (6), characterized in that means are provided for altering the relative position of the colour wheel (6) in view of the path of said light beam (7), between at least a first position wherein the colour wheel (6) interferes with the image building light beam (7) and a second position wherein it does not interfere with said light beam (7).

## Description

The present invention relates to a digital video projection device.

Special events such as stage performances, television shows and presentations typically require two types of devices to create a desired mood and atmosphere. Lighting devices or spotlights that illuminate and highlight performers and surrounding areas, as well as projectors that project images that further promote the desired mood and atmosphere onto stage and adjacent surfaces.

Spotlights can be simple static devices that are manually positioned and focused or sophisticated remote controlled devices capable of a wide range of variations and combinations of position, beam size, colour and images.

In a focusing spotlight, an open aperture of the spotlight or a physical mask or gobo placed in that aperture forms an image.

In the case of remote controlled spotlights, a selection of gobos is often available, typically on a wheel with indexed positions. The selection of gobo can thus be made remotely. Many remote controlled spotlights offer multiple wheels with gobos and many also have a facility to rotate or position the selected gobo around its central axis. But the gobos must nevertheless be pre-selected and physically mounted inside the spotlight prior to the event. This is a time consuming process and the cost of the gobos is also a major drawback of this embodiment.

Projectors are also used for special events. In digital projection using digital light valves, colour projection can be achieved according to two main principles. According to a first principle, commonly known as the three-chip system, use is made of three electronic light valves fitted with colour filters, each handling one primary colour.

According to the second principle, known as the single chip mechanism, a single electronic light valve handles all the primary colours in sequence by means of a continuously rotating wheel with discreet colour segments.

In a single chip projection system, the light from a light source passes through the perimeter of the continuously rotating wheel with three or more discreet colour segments, each being a band pass filter. The light passes through this colour wheel and the light valve is presented with a sequence of colours, typically red, green and blue.

The timing of this sequence is synchronised with the timing of an electronics circuit driving the electronic light valve. The electronic light valve alternatively handles the image information relevant to the colours presented to it. The projected image thus consists of three or more images presented in rapid sequence, faster than the integration time of human vision for colour and thus appearing as one image to the viewer.

The projectors thus provide the possibility of true moving images and of instant manipulation of the images by remote control. Some projectors have facilities for remote control of their position, brightness, focus, etc.

For most events, both above mentioned devices, spotlights and projectors must be used, installed, operated and maintained. A major inconvenience of this need for two devices is essentially the cost of both devices.

Another inconvenience is the complexity to operate and maintain both lighting and projection devices during a same event.

Yet another inconvenience is that the use of both lighting and projection devices imposes creative limitations, as a choice must be made for each individual mounting position between a lighting device or a projection device.

Remote controlled digital video projectors would be the answer to the above mentioned inconveniences as they would be capable of not only function as projectors, but also emulate all the functions of remote controlled spotlights. Indeed several attempts to design and build such devices have been made but they have had only limited commercial success. This is to a large extent due to significant limitations inherent in all digital projection devices.

A first limitation is the relatively low efficiency of the digital video projection system, resulting in low to moderate light output. This is due to the way digital video projectors split light into three primary colours such as red, green and bleu, and then recombine those colours by using digital light valves.

As a result, a digital video projector typically achieves half the brightness of a spotlight with a light source of comparable lumens output. Increasing the power of the light source in the projector can compensate for the low efficiency but at a cost of considerably increased power dissipation and increased internal temperatures in the projector. Therefore an increased forced cooling will be required in the projector itself, as well as increased ventilation in the stage or studio where the projector is being used.

Higher-powered light sources also mean higher energy costs and bigger environmental impact.

A second limitation is the limited range of colours that can be achieved with a digital video projector. This is due to split and a recombination of primary colours. This typically manifests itself as lack of colour depth, particularly in the blue and red parts of the spectrum. Deep, saturated blue and red colours can as such not be produced.

The goal of the present invention is to provide a solution for one or more of the above-mentioned and other inconveniences.

Hereto the present invention concerns a digital video projection device comprising a light source to produce an image building light beam, one or more lenses, a light valve and a colour wheel, whereby means are provided for altering the relative position of the colour wheel in view of the path of said light beam, between at least a first position wherein the colour wheel interferes with the image building light beam and a second position wherein it does not interfere with said light beam.

An advantage of the present invention is that the digital video projection device according to the invention can be used as a known digital projection device by positioning the concerned colour wheel in an interfering position with the image building light beam and as a lighting device by positioning the colour wheel such that it does not interfere with said light beam.

Another advantage of the digital video projection device according to the invention is that it can replace the known digital projection devices and the known lighting devices, thereby limiting the number of devices to be provided.

Such a reduction of required devices allows for a reduction of transport, a reduction of manpower needed to rig said devices, a reduction of the weight of said rig, a reduction of the required cabling, a reduction of the power consumption and a reduction of maintenance of the devices.

Furthermore the present invention provides a solution for the positioning of the lighting and projection devices, since both are integrated into one single device.

In order to better explain the characteristics of the present invention, the following embodiments of a light projection device according to the invention are described as an example only without being limitative in any way, with reference to the accompanying drawings, wherein:
figure 1 schematically represents a video projection device according to the invention;
figure 2 represents a cross section according to line II-II in figure 1;
figure 3 represents the same cross section as figure 2, though in a different position;
figures 4 to 8 represent variants of figures 2 and 3.

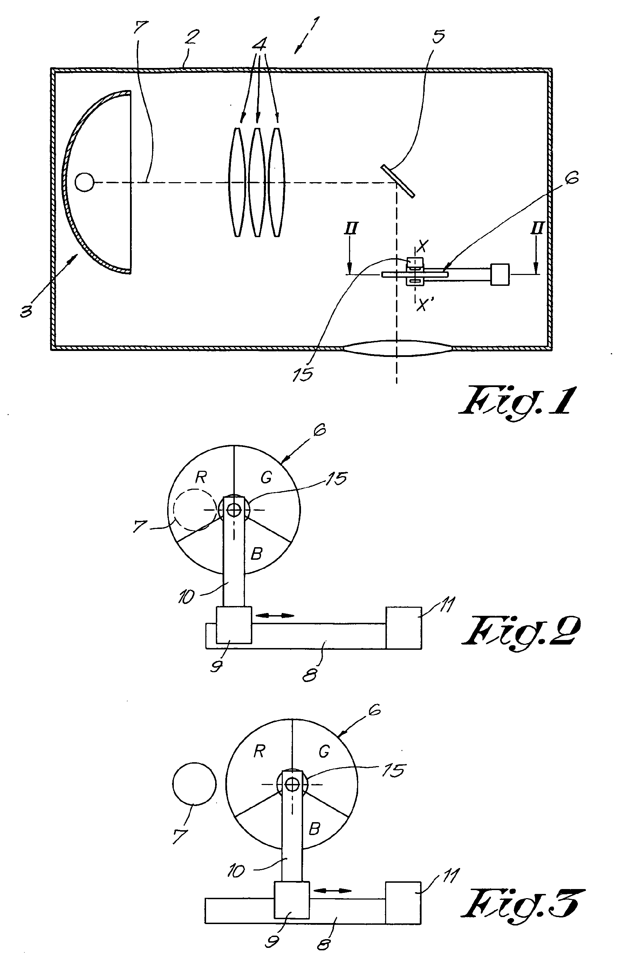

A digital video projection device 1 according to the invention, as represented in figure 1, mainly consists of a housing 2, wherein a light source 3, one or more lenses 4, a light valve 5 and a colour wheel 6 are provided.

Said light source 3 and lenses 4 are well known in the art and will not be discussed in detail.

The light valve 5 preferably is a so-called digital micromirror device (DMD) consisting of an array of individually controllable mirrors, each corresponding to a pixel of the image to be built, but may also consist of an array of individually controllable liquid crystals or the like.

The colour wheel 6 consists of a rotatable disc that is divided in three or more discreet segments of different colours, for example red, green and bleu or yellow, magenta and cyan.

According to the invention, the digital video projection device is provided with means for positioning the colour wheel 6 between a first position, wherein it interferes with an image building light beam 7 emitted by the light source 3, and a second position, wherein said colour wheel 6 does not interfere with said light beam 7.

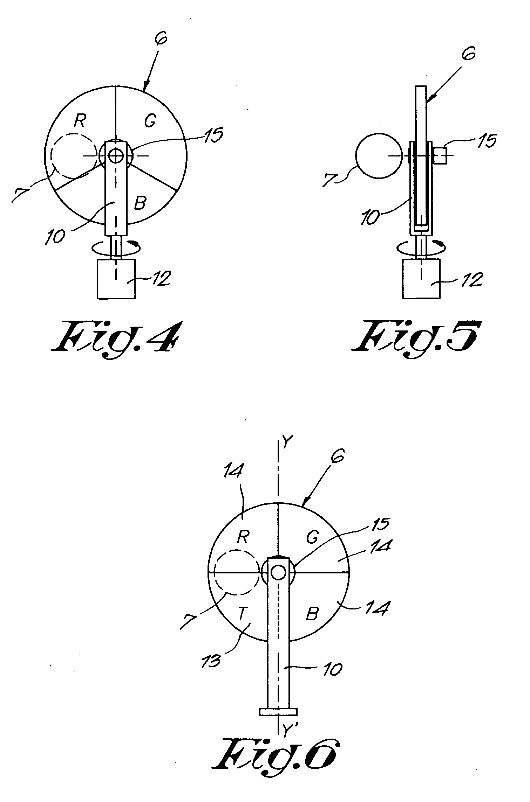

As represented in figures 2 and 3, said means may, for example, consist of a transversal displacing device that comprises a guide 8 whereupon a slider 9 is mounted on which a suspension 10 for the colour wheel 6 is fixed.

Driving means 11 hereby permit to move the slider 9 along said guide 8, between a first position wherein the colour wheel 6 is positioned in the path of the light beam 7 and a position wherein the colour wheel 6 is positioned next to the light beam 7.

The functioning of the digital light projection device according to the invention is easy and as follows.

In a so called 'video' mode, wherein the projection device is used to project true moving images on a screen or stage, the colour wheel 6 spins at high speed around its central axis X-X' and the colour wheel 6 is situated in said first position, whereby the light beam emitted by the light source 3 through the perimeter of the colour wheel 6 and thus interferes with a segment of said colour wheel 6.

Since the colour wheel is spinning, the interfering light beam 7 changes of colour with a speed that is preferably higher than the integration time of human vision for colour, so that an image built on the screen or on stage consists of a number of subsequently projected unicoloured images.

In order to alter the mode of the projection device to 'light' mode, said driving means 11 are activated, such that the slider 9 and thus the colour wheel 6 are moved out of the path of the image building light beam 7.

In this position, the light valve 5 is continuously illuminated and the colour wheel 6 does not interfere with the light beam 7 that, as such, is not filtered and thus is brighter than the light beam leaving the projection device 1 when operating in a 'video' mode.

It is clear that in both the 'video' mode and the 'light' mode, a subtractive colour mixing system may be applied, in order to animate or enhance the projected image.

Such a subtractive colour mixing system consists of a number of wavelength selective filters that intercept the beam of light emitted by the light source 3 to a lesser or greater degree. Such subtractive colour mixing system can be fitted anywhere in the digital video projection device, in front of or behind the digital light valve 5. An example of a subtractive colour mixing system is described in the U.S. patent No. 4.914.556.

It is remarked that in either position of the colour wheel 6, said wheel, preferably, is kept spinning, such that the projection device 1 allows a fluent switch between the 'video' mode and the 'light' mode.

Figures 4 and 5 represent another embodiment of a video projection device according to the invention, wherein the suspension 10 of the colour wheel 6 is provided on a socket 12, whereby said suspension 10 may be turned around an axis Y-Y' perpendicular to the centre axis X-X' of the colour wheel 6 and perpendicular to the direction of the light beam 7.

Said driving means 11 for the colour wheel 6 hereby allow the rotation of the spinning colour wheel 6 around the Y-Y' axis, between said first position wherein the colour wheel 6 is positioned transversely to the light beam and said second position wherein the colour wheel is positioned parallel to and next to the light beam 7, thereby switching digital projection device 1 between the 'video' mode and the 'light' mode.

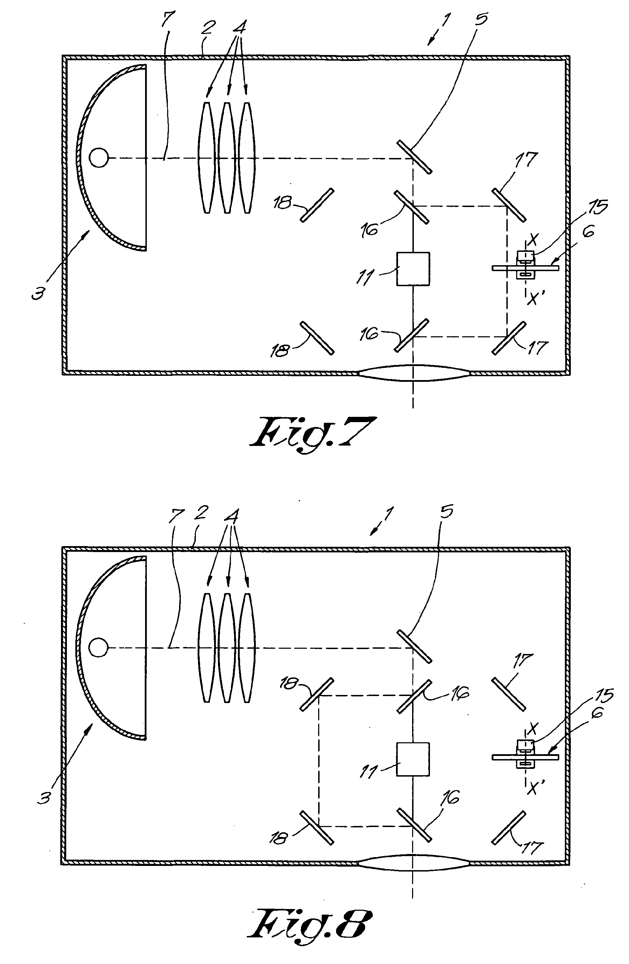

Figure 6 represent a third embodiment, whereby the colour wheel 6 is divided in at least four segments, namely one transparent segment 13 and three coloured segments 14.

In this embodiment, a motor 15, for spinning the colour wheel 6 around its axis X-X', is provided with a stop part that is not represented in the drawings, and that can be activated such that the colour wheel 6 is blocked in a position wherein the transparent segment 13 is situated in the path of the image building light beam 7 and as such does not interfere with said light beam 7.

Figures 7 and 8 finally, represent a fourth embodiment, wherein the relative position of the colour wheel 6 to the light beam 7 can be varied by altering the path of the light beam 7.

In this fourth embodiment, additional mirrors 16, 17 are provided in the housing 2, namely a first controllable mirrors 16 that are connected to the driving means 11, a first set of mirrors 17, in between which the spinning colour wheel 6 is provided and a second set of mirrors 18.

The controllable mirrors 16 are hereby arranged to switch between a first position wherein the light beam 7 is reflected via the first set of mirrors 17 and through the colour wheel 6, and a second position wherein the light beam 7 is reflected via the second set of mirrors 18, without interference of the colour wheel 6.

It is clear that many other kinds of configurations and /or driving means 11 can be applied to alter the relative position of the colour wheel 6 in view of the path followed by the light beam 7.

As will be appreciated, the above described embodiments of a digital video projection device according to the invention allows the operator of the device to dynamically change the operation mode of the device between 'video' mode using the single chip projection principle and 'light' mode, using continuous illumination of the light valve and optionally the subtractive colour mixing system.

The present invention is by no means limited to the above described embodiments given as an example only and represented in the accompanying drawings; on the contrary, such a digital light projection device can be realised in all sorts of variants while still remaining within the scope of the present invention.

## Claims

1. Digital video projection device comprising a light source (3) to produce an image building light beam (7), one or more lenses (4), a light valve (5) and a colour wheel (6), **characterized in that** means are provided for altering the relative position of the colour wheel (6) in view of the path of said light beam (7), between at least a first position wherein the colour wheel (6) interferes with the image building light beam (7) and a second position wherein it does not interfere with said light beam (7).

2. Digital video projection device according to claim 1, **characterized in that** said means consist of a, relative to the direction of the light beam, transversal displacing device for moving said colour wheel (6) between said first and second position.

3. Digital video projection device according to claim 1 and 2, **characterized in that** said transversal displacing device consists of a suspension (10) for the colour wheel (6), a guide (9) wherein said suspension (10) is provided, and driving means (11) for moving the suspension (10) over the guide (9).

4. Digital video projection device according to claim 1, **characterized in that** said means consist of a rotating device for turning said colour wheel (6), around an axis (A-A') perpendicular to the central axis (B-B') of said wheel (6), between said first and second position.

5. Digital video projection device according to claim 4, **characterized in that** said rotating device consists of a suspension (10) for the colour wheel (6), and a rotatable socket (12) where upon said suspension (10) is provided, and driving means (11) for rotating the suspension (10).

6. Digital video projection device according to claim 1, **characterized in that** the colour wheel (6) is divided in at least four segments (13, 14), one of which is transparent.

7. Digital video projection device according to claim 6, **characterized in that** the means for positioning the colour wheel (6) consist of a motor (15) for rotating said colour wheel (6) and of a stop part for maintaining the colour wheel (6) in a fixed position with the transparent segment (13) positioned in the path of the image building light beam (7).

8. Digital video projection device according to claim 1, **characterized in that** it comprises one or more mirrors (16,17,18) that are arranged as to alter the path of the light beam (7) relative to the colour wheel (6).

9. Digital video projection device according to any of the preceding claims, **characterized in that** it comprises a subtractive colour mixing system.
